Europäisches Patentamt

European Patent Office

Office européen des brevets

(11) Publication number: **0 175 408**
**B1**

# EUROPEAN PATENT SPECIFICATION

(45) Date of publication of patent specification: **31.01.90**

(51) Int. Cl.⁵: **G 11 B 7/26,** G 11 B 7/24

(21) Application number: **85201367.1**

(22) Date of filing: **30.08.85**

(54) Method of manufacturing an optically readable information disk.

(30) Priority: **03.09.84 NL 8402681**

(43) Date of publication of application:
**26.03.86 Bulletin 86/13**

(45) Publication of the grant of the patent:
**31.01.90 Bulletin 90/05**

(84) Designated Contracting States:
**DE FR GB IT NL**

(56) References cited:
**WO-A-82/01098**
**WO-A-83/03484**
**DE-A-3 013 099**
**GB-A-1 527 124**
**PATENTS ABSTRACTS OF JAPAN, vol. 6, no.
229 (P-155) 1107r, 16th November 1982; & JP - A
- 57 130 245 (SANYO DENKI K.K.) 12-08-1982**
**PATENTS ABSTRACTS OF JAPAN, vol. 3, no.
124 (E-144), 17th October 1979, page 69 E 144; &
JP - A - 54 100 703 (MITSUBISHI DENKI K.K.)
08-08-1979**

(73) Proprietor: **N.V. Philips' Gloeilampenfabrieken
Groenewoudseweg 1
NL-5621 BA Eindhoven (NL)**

(72) Inventor: **van Tongeren, Hendricus Franciscus
Joannes Jacobus
c/o INT. OCTROOIBUREAU B.V. Prof. Holstlaan 6
NL-5656 AA Eindhoven (NL)**
Inventor: **Legierse, Petrus Egidius Jacobus
c/o INT. OCTROOIBUREAU B.V. Prof. Holstlaan 6
NL-5656 AA Eindhoven (NL)**
Inventor: **van Maurik, Wilhelmus Barend
c/o INT. OCTROOIBUREAU B.V. Prof. Holstlaan 6
NL-5656 AA Eindhoven (NL)**

(74) Representative: **Weening, Cornelis et al
INTERNATIONAAL OCTROOIBUREAU B.V. Prof.
Holstlaan 6
NL-5656 AA Eindhoven (NL)**

## Description

The invention relates to a method of manufacturing an optically readable information disk comprising an optically readable information track of areas situated alternately at a higher and a lower level in which a synthetic resin substrate is provided with a metal layer and subsequently the assembly of substrate and metal layer is subjected to a pressing process whereby the desired information track is formed in the disk by means of a die the surface of which bearing a pattern in the form of the negative of the desired information track.

Such a method is known from WO—A—8 201 098. According to this known method an embossable video disc blank is used comprising a base and a radiation reflective or conductive layer which for example is a metal layer. The base may be unitary in construction and consists of an embossable polymeric material, particularly a thermoplastic material such as polyvinyl chloride. The base also may be a composite layer such as a film carrying an embossable layer on at least one side thereof. The embossable layer is a polymeric layer which may be thermoplastic or a heat-softenable radiation curable layer. The reflective-metal-layer is as thin as possible. The thickness amounts to 0.2—200 nm and more preferably up to 75 nm. The reflective layer is provided by means of for example vapour coating. The blank disc is embossed with a stamper so as to replicate the desired information carrying pattern on the surface of the disc. Hereby patternwise depressions are formed in the embossable polymeric material of the base. As a result the reflective-metal-layer may be ruptured whereby a piece of metal is separated and deposited on the bottom of the depression in the base. The metal layer can also be stretched so as to form a thin neck portion at the edge of the depression in the base.

This known process has not yet been used in practice. The said process enables cheap discs to be manufactured. The quality of the disks is less good. The quality of the stored information deteriorates rapidly, so that upon reproduction a significant loss of quality is observed.

According to another process, known from the Japanese Patent Application Publication Nr 57—130245, a transparent base plate made of synthetic resin is coated with a layer of a radiation curable resin. The resin layer contains 10—20 vol.% of dispersed particles of Al or Ag. A nickel master is pressed against the surface of the resin layer and the resin is polymerized (or set) by irradiation with U.V. light from the base plate side. After curing the base plate together with the cured resin layer is removed from the master. This type of process is a so-called 2P process which stands for photopolymerization process. A 2P process is performed at a very low pressure and is essentially different from a pressing process as in the underlying case. The disk obtained according to the process of said Jap. reference has a rather low reflectivity and therefore a low signal-to-noise ratio. Also the application and handling of the resin slurry easily gives rise to problems in the manufacturing process. Furthermore the problem exists that after irradiation and peel-off some material may stick to the master disk. Such contamination influences adversely the further production of disks.

It is the object of the present invention to provide a method of manufacturing an optically readable information disk which results in cheap disks having a permanent good quality of the stored information.

This object is achieved by a method mentioned in the opening paragraph which is characterized in that the synthetic resin substrate on at least one main surface is provided with an electrolessly deposited metal layer which is covered with an electroplated layer of a soft metal having a thickness in the magnitude of one micron, and that by means of the pressing process only the surface region of the metal layer is provided with the information track, the surface of the resin substrate adjoining the metal layer remaining flat.

The substrate is manufactured from a synthetic resin, such as polyesters, for example, polyethylene terephthalate, polystyrene, polyethylene, polypropylene, polycarbonate, polymethyl methacrylate, and polyvinyl chloride.

In a further preferred form of the method according to the invention a synthetic foil is used which on at least one major surface is provided with an electrolessly deposited layer of Ag, Ni or Cu which is covered with an electroplated layer of In or a Pb—Sn alloy.

The synthetic resin foil preferably has a good surface quality, in particular a good smoothness. The thickness of the foil is approximately 200 µm.

The first metal layer of preferably Ag, Ni or Cu is electrolessly deposited, for example, by means of an electroless chemical deposition process in which the substrate and particularly the foil, after a pretreatment with, for example, tannin and stannous chloride, is treated with an aqueous solution of an Ag, No or Cu salt, for example, silver nitrate and an aqueous solution of a reducing agent, for example, glucose.

The first metal layer is a very good electrical conductor so that the second metal layer can be provided electrolytically. The use of a Pb—Sn alloy has the advantage that this material does not adhere to the die with which the information track is compressed into the metal layer. No die contamination occurs, which occurs to some extent with the pure metals Pb and Sn. Another advantage is that very smooth surfaces are obtained at low current densities with the Pb—Sn alloys. A further advantage is that the smooth and flat Pb—Sn layer is sufficiently soft to compress information therein under mild conditions.

The invention will be described in greater detail by means of the drawing, in which:

Figure 1 is a cross-sectional view of the optically readable information disk and the die used in the process according to the invention, and

Figure 2 is an elevation of a diagrammatic production line for the manufacture of optically readable informations disks.

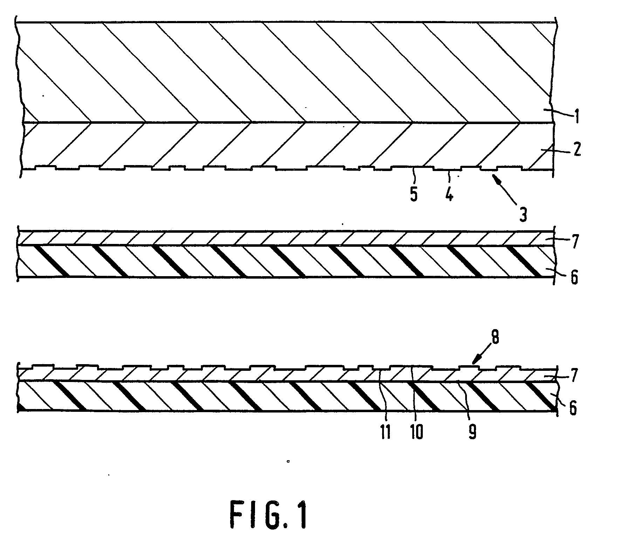

Reference numeral 1 in Figure 1 denotes one press densities with the Pb—Sn alloys. A further advantage is that the smooth and flat Pb—Sn layer is sufficiently soft to compress information therein under mild conditions. The thickness of the Pb—Sn layer is approximately 1 μm.

In a further favourable embodiment the metal layer is covered with a protecting lacquer which in turn is covered with a syntheic resin foil which, if so desired can be removed when the disk is used.

The invention also relates to a method of manufacturing optically readable information disks according to the invention, which is characerized in that a strip-shaped substrate which has a metal layer on one or both main surfaces is guided into a press or between a pair of rollers. A die of the press or the surface of one of the rollers bearing a pattern in the form of a negative of the desired information track, the information track is formed only in the metal layer of the substrate by compression or by rollers, at least the exposed surface of the part of the metal layer comprising the information track is provided with a transparent protective layer of a synthetic resin, and the information disk is separated from the remainder of the substrate strip by cutting outside the circumference of the information track present in the metal layer, and optionally a hole is punched in the centre of the substrate portion provided with the information track.

In a favourable embodiment of the method reference holes are provided on the sides of the substrate, with which holes the substrate can be exactly positioned.

The invention will be described in greater detail by means of the drawings, in which:

Figure 1 is a cross-sectional view of the optically readable information track according to the invention, as well as the device for the manufacture thereof, and

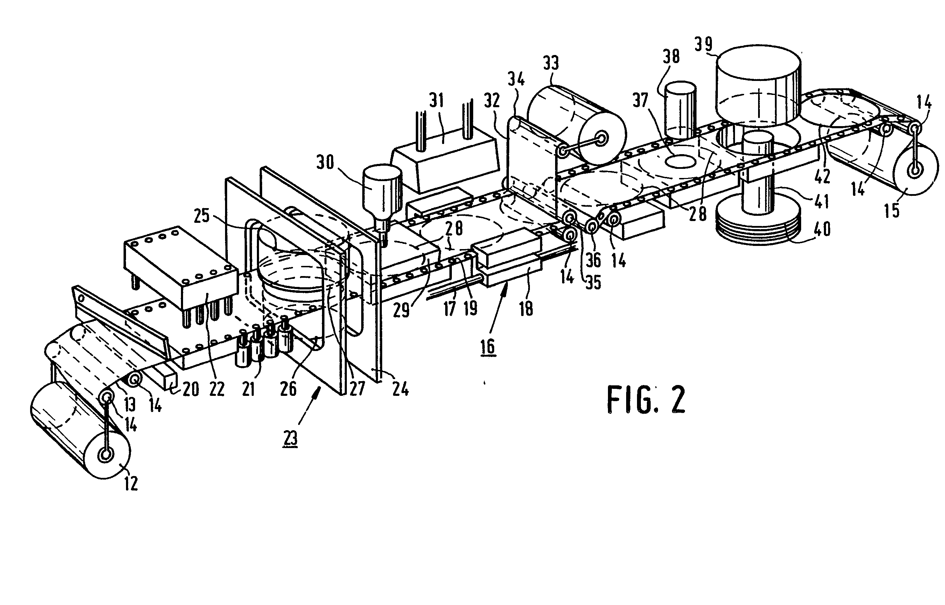

Figure 2 is an elevation of a diagrammatic production line for the manufacture of optically readable information disks according to the invention.

Reference numeral 1 in Figure 1 denotes one press half which has a die 2 manufactured, for example, from Ni. Die 2 has an informatin track 3 comprising information areas situated alternately at a higher level 4 and at a lower level 5. The information areas have small dimensions. The longitudinal dimensions vary in accordance with the stored information and are from approximately 0.3 to approximately 3 μm. The difference in height of the areas is between 0.1 and 0.2 μm. The information track 3 is the negative of the desired information track in the optically readable information track to be manufactured.

A synthetic resin foil 6 of polyester comprises a metal layer 7 on one side. The metal layer may be manufactured from, for example, In, Ag, Sn, Pb, Cu, Al. The metal layer preferably comprises a Pb—Sn alloy. The metal layer is obtained by first providing the foil with an electrolessly deposited Ag-layer, for example, by using the chemical metallisation process known per se. A Pb—Sn layer in a thickness of 1 μm is provided on the layer of Ag by electroplating.

The resulting Pb—Sn layer has a smooth surface. It is possible in principle to provide the metal layer 7, for example, a Pb—Sn layer, on the foil 6 by using a vapour deposition process or a sputtering process. With a layer thickness of 1 μm the duration of the process is very long so that the above-described, electroless chemical process is to be preferred.

Press 1 with die 2 is pressed on the metal layer 7 with a pressure of 50—200 N/mm$^2$. As a result of this, an information track 8 is formed in the metal layer 7, which track is the negative of the information track 3. The information track 8 is present only in layer 7, the interface 9 of foil 7 and foil 6 remaining entirely flat. Track 8 comprises optically readable information areas alternately at a higher level 10 and at a lower level 11.

Reference numeral 12 in Figure 2. denotes a supply reel for foil 13. Foil 13 comprises a metal layer, not shown, quite in accordance with Figure 1, lowest drawing.

The metal layer as shown in Figure 2 is present on the top side. Foil 13 is moved discontinuously from supply reel 12, via guide rollers 14, to a winding reel 15. The discontinuous movement is carried out by the transporting mechanism, referenced diagrammatically 16, which for this purpose comprises a carriage 18 which is movable along a rod 17 and is provided with retractable pins (not shown) arranged to fit in the reference holes 19 provided along the side edges of foil 13.

After unwinding from the storage reel 12, the foil 13, passes through a cutting-bonding device 20 with which, when a new roll of foil is inserted, the ends thereof are cut off exactly and are bonded together with overlap. Foil 13 is provided adjacent to both edges with reference holes 19 which serve for an exact positioning of the foil during the various treatments, for example, pressing of information, providing protecting lacquer, making a central hole and punching. For this purpose, positioning pins, as referenced 21, which cooperate with reference holes 19 are provided regularly in the production line. These reference holes 19 are provided by a hole-punching machine 22. An optically readable spiral-like information track is pressed in the metal layer of the foil 13 by means of a press 23, quite in conformity with the method shown in Figure 1. Press 23 comprises a frame 24 and two press halves 25 and 26, respectively. The top press half 25 comprises a matrix 27, as is shown in Figure 1, which comprises a spiral-like information track 3 (see Figure 1). A circular area in the metal surface of the foil 13 which is thus provided with information, which foil part will hereinafter also be referred to as the information part, is referenced 28. A U.V.-light curable lacquer supplied from a lacquer reservoir 30 is then provided over information part 28 by means of rake 29. The protective laquer is cured with UV-light originating from lamp 31. A further protective layer is provided in the form of a foil 32 which is unwound from storage reel 33 via guide rollers 34 and is bounded to foil 13 by means of a pressure roller 35. The foil 32 may for this purpose be provided on one side with a layer of glue. The foil is transported via tensioning roller 36 to cutting cylinder 38 with which a central hole 37 is punched. Foil 13 is then cut through outside the circumference of the information part 28 by means of a cutting cylinder 38 and the resulting information disk 40 is received on a tube 41. The remainder of the foil now comprises holes 42 is wound on winding reel 15.

**Claims**

1. A method of manufacturing an optically readable information disk comprising an optically readable information track of areas situated alternately at a higher and a lower level in which a synthetic resin substrate is provided with a metal layer and subsequently the assembly of substrate and metal layer is subjected to a pressing process whereby the desired informatin track is formed in the disk by means of a die the surface of which bearing a pattern in the form of the negative of the desired information track characterized in that the synthetic resin substrate on at least one main surface is provided with an electrolessly deposited metal layer which is covered with an electroplated layer of a soft metal having a thickness in the magnitude of one micron, and that by means of the pressing process only the surface region of the metal layer is provided with the information track, the surface of the resin substrate adjoining the metal layer remaining flat.

2. A method as claimed in claim 1 in which as the synthetic resin substrate, a synthetic resin foil is used which on at least one major surface is provided with an electrolessly deposited layer of Ag, Ni or Cu which is covered with an electroplated layer of In or a Pb—Sn alloy.

**Patentansprüche**

1. Verfahren zur Herstullung einer optisch lesbaren Informationsplatte mit einer optisch lesbaren Informationsspur abwechselnd auf einem höheren und niedrigeren Niveau liegender Gebiete, wobei ein Kunststoffsubstrat mit einer Metallschicht versehen wird, wonach das Gebilde aus Substrat und Metallschicht einem Preßvorgang ausgesetzt wird, wodurch mittels einer Matrize, deren Oberfläche ein Muster in Form des Negativs der gewünschten Informationsspur trägt, die gewünschte Informationsspur in der Platte gebildet wird, dadurch gekennzeichnet, daß das Kunststoffsubstrat an wenigstens einer Hauptflache mit einer stromlos angebrachten Metallschicht versehen wird, die mit einer galvanisch angebrachten Schicht aus einem Weichmetall mit einer Dicke in der Größenordnung eines Mikrons abgedeckt wird, und daß mittels des Preßverfahrens nur das Oberflächengebiet der Metallschicht mit der Informationsspur versehen wird, wobei die an die Metallschicht grenzende Oberfläche des Kunststoffsubstrats flach bleibt.

2. Verfahren nach Anspruch 1, bei dem als Kunststoffsubstrat eine Kunststoffolie verwendet wird, die an wenigstens einer Hauptoberfläche mit einer stromlos angebrachten Schicht aus Ag, Ni oder Cu versehen wird, die mit einer galvanisch angebrachten Schicht aus In oder aus einer Pb—Sn-Legierung bedeckt ist.

**Revendications**

1. Procédé pour la réalisation d'un disque d'information lisible par voie optique, comportant une piste d'information lisible voie optique constituée par des domaines situés alternativement à un niveau plus élevé et à au niveau plus bas, selon lequel un substrat en matière synthétique est muni d'une couch métallique et après quoi l'ensemble du substrat et de la couche métallique est soumis à un processus de pressage par lequel la piste d'information désirée est formée dans le disque à l'aide d'une matrice dont la surface présente une configuration sous forme du négatif de la piste d'information désirée, caractérisé en ce que sur au moins une surface principale, le substrat en matière synthétique est muni d'une couche métallique déposée sans courant et recouverte d'une couche appliquée par voie électrolytique en un métal doux d'une épaisseur de l'ordre de grandeur de 1 micron et en ce qu'à l'aide du procédé de pressage seule la région superficielle de la couche métallique est munie de la piste d'information, la surface du substrat en matière synthétique contiguë à la couche métallique restant plane.

2. Procédé selon la revendication 1, selon lequel on utilise, comme substrat en maître synthétique, une feuille synthétique dont au moins une surface principale est munie d'une couche déposée sans courant en Ag, Ni, ou Cu qui est recouverte d'une couche réalisée par voie électrolytique en Ni ou un alliage de Pb—Sn.

FIG. 1

FIG. 2